Europäisches Patentamt

European Patent Office

Office européen des brevets

(19)

(11) Publication number: **0 162 674**
A2

# (12) EUROPEAN PATENT APPLICATION

(21) Application number: **85303471.8**

(22) Date of filing: **17.05.85**

(51) Int. Cl.⁴: **A 23 B 7/148**
**A 23 B 7/152**

(30) Priority: **21.05.84 AU 5076/84**
**21.05.84 AU 5077/84**

(43) Date of publication of application:
**27.11.85 Bulletin 85/48**

(84) Designated Contracting States:
**AT BE CH DE FR GB IT LI LU NL SE**

(71) Applicant: **Russo, Gaetano**
**45 Norville Street**
**East Bentleigh Victoria(AU)**

(71) Applicant: **Cammiss, Mark Anthony**
**1, Minilya Avenue**
**Mount Waverley Victoria(AU)**

(72) Inventor: **Russo, Gaetano**
**45 Norville Street**
**East Bentleigh Victoria(AU)**

(72) Inventor: **Cammiss, Mark Anthony**
**1, Minilya Avenue**
**Mount Waverley Victoria(AU)**

(74) Representative: **Newby, John Ross et al,**
**J.Y. & G.W. Johnson Furnival House 14/18 High Holborn**
**London WC1V 6DE(GB)**

(54) **Apparatus and method for control of fruit ripening, degreening and storage.**

(57) Apparatus and process for removing carbon dioxide from and/or dosing ethylene into an enclosed space used for fruit and vegetable ripening, degreening or storage comprising a carbon dioxide absorption system including an aqueous solution of carbon dioxide absorbent wherein the atmosphere from the enclosed space is substantially cleansed of carbon dioxide and simultaneously the atmosphere picks up water to substantially saturation concentration to humidify the atmosphere, and digital release apparatus for receiving small containers of pressurised ethylene whereby discrete amounts of ethylene gas are released from said containers to substantially prevent risk of fire or explosion in the enclosed space.

FIG.1.

## APPARATUS AND METHOD FOR CONTROL OF
## FRUIT RIPENING, DEGREENING AND STORAGE

This invention relates to carbon dioxide removal from, and ethylene dosing into an enclosed space particularly fruit and vegetable ripening and degreening rooms.

The invention will be described with particular reference to ripening and degreening rooms, storage houses for fruit and vegetables.

Carbon dioxide gas ($CO_2$) is released to the surrounding atmosphere during the ripening and/or degreening of fruits and vegetables. This is a natural consequence of the ripening process whether unassisted or assisted with ripening agents such as ethylene gas.

Modern agricultural techniques often require the controlled ripening or degreening of fruits such as bananas, tomatoes and citrus. This is usually achieved by the use of ethylene gas to promote the desired ripening/degreening.

The ripening is usually carried out in a sealed room to enable the desired conditions to be met. During this process $CO_2$ builds up in the room. As the $CO_2$ concentration rises, the ripening process is retarded.

For example with citrus fruits at approximately 4.0% $CO_2$ the degreening process ceases completely. With existing techniques this requires the purging of the ripening room and recharging with ethylene gas. During the ripening/degreening cycle of 3 to 4 days the purging of the stale atmosphere and recharging with ethylene gas needs to be repeated at 12 hourly intervals. This is a labor intensive activity leading to high wastage of ethylene gas and prolongation of the ripening/degreening process.

The conditions under which the ripening/degreening is carried out is conducive to the spread of bacteria and fungi through the fruit leading to spoilage. Prolonging the ripening/degreening serves to increase the risk of losses due to spoilage.

The drive towards efficiency and cutting losses through spoilage has lead to many processors installing facilities to continuously bleed the atmosphere from their ripening/degreening rooms and to continuously add ethylene and water to keep the desired levels in the surrounding atmosphere. This is both wasteful of energy and ethylene but achieves efficiency in labor and lowers spoilage rates through reduction in ripening/degreening time. Furthermore, humidity levels are difficult to maintain which may lead to a dry atmosphere causing splitting of fruit and stem shrinkage.

Since ethylene can form an explosive mixture with air, normal practice is to store ethylene gas in pressurized cylinders. In some applications, ethylene is mixed with large quantities of an inert gas such as carbon dioxide or nitrogen. This eliminates the risk of explosion. Approximate size of conventional storage cylinders is 5 to 50 litres. To treat fruit or vegetables, this mixture of ethylene and inert gas is admitted to the ripening room for a specified length of time. For most applications, the size of the cylinder storing the ethylene gas mixture is quite large and only a small fraction of its contents is used for each batch of fruit or vegetable to be treated.

The disadvantages of current ripening practice are:-

(1) In most cases the amount of ethylene gas used for the treatment is not directly measured which in some cases can lead to uneven or inconsistent ripening or maturing of the fruit or vegetables and in other cases lead to over use of the ripening gas. This leads to inefficient use of labour watching over the process and increases the risk of spoilage.

(2) Diluting the ethylene gas with carbon dioxide to make it safe for handling can be counter productive since carbon dioxide gas slows down or halts the ripening process in many fruits and vegetables. The net result of this effect is to use more ripening gas than would otherwise be the case.

The present invention has as its objective the provision of a carbon dioxide absorber for use with or without ethylene injection in which the above problems are minimised.

There is provided according to the present invention a carbon dioxide absorption system for a fruit and vegetable ripening or degreening room comprising a tower through which atmosphere from said room is adapted to be circulated, passing an aqueous solution of carbon dioxide absorbent through the tower to allow said atmosphere to contact said solution and to react with and remove carbon dioxide from said atmosphere wherein the atmosphere picks up water to substantially saturation concentration to humidify said atmosphere.

Conveniently a pH sensor is provided to contact said solution and is operable to activate a control valve adapted to admit fresh carbon dioxide absorbent to said solution whereby the pH of the solution is maintained to efficiently use the absorbent properties of the solution selected. For example, a sodium hydroxide absorbent solution is controlled to a pH between 9.5 and 10.5. Alternatively a pH indicator may be used.

It has been previously proposed, for example, in U.S. Patent No. 3,594,986 to use a solid absorption medium such as active carbon or zeolite and in fact such equipment may be used in conjunction with the absorber of the present invention.

The major disadvantage of the solid absorption medium is that there is no humidification of the treated atmosphere and futher dilution of carbon dioxide below 3% is difficult to achieve.

Thus the present invention provides for simultaneous humidification of the atmosphere and reduction of carbon dioxide to negligible levels below 3%.

Low levels of carbon dioxide, and high humidity, coupled with small measured amounts of ethylene gas introduced into the atmosphere will achieve effective and relatively low cost control of the three critical variables within ripening/degreening rooms, namely carbon dioxide, ethylene and humidity.

There is also provided by the present invention a system of ethylene injection into a fruit or vegetable ripening or degreening room comprising packaging ethylene gas at high pressure in small pressure containers releasing the stored gas in predetermined amounts through a venturi outlet to mix the gas with surrounding air or the atmosphere of said room into which ethylene is to be injected wherein the injected gas mixture is non-flammable.

The present invention provides for a measured injection of ethylene which can be conveniently used in conjunction with the carbon dioxide absorber described previously and is particularly applicable for use in ripening and degreening of bananas, pears, mangoes, papaws, melons, avocados and tomatoes, as well as citrus fruits.

Thus the invention provides a method of packaging ethylene ripening gas in small disposable pressure containers allowing for digital or discrete addition of ethylene gas into ripening rooms. The venturi mixing valve ensures that the potentially explosive ethylene gas is sufficiently diluted to restrict the risk of fire and/or explosion.

The invention will be described in greater detail with reference to the accompanying drawings in which

Figure 1 is a schematic view of a carbon dioxide gas absorption apparatus;

Figures 2 and 3 are schematic views of modified forms of carbon dioxide absorbers;

Figure 4 is a side view of part of an ethylene injection unit;

Figure 5 is a side view of an assembled ethylene injection unit coupled to a venturi mixing unit

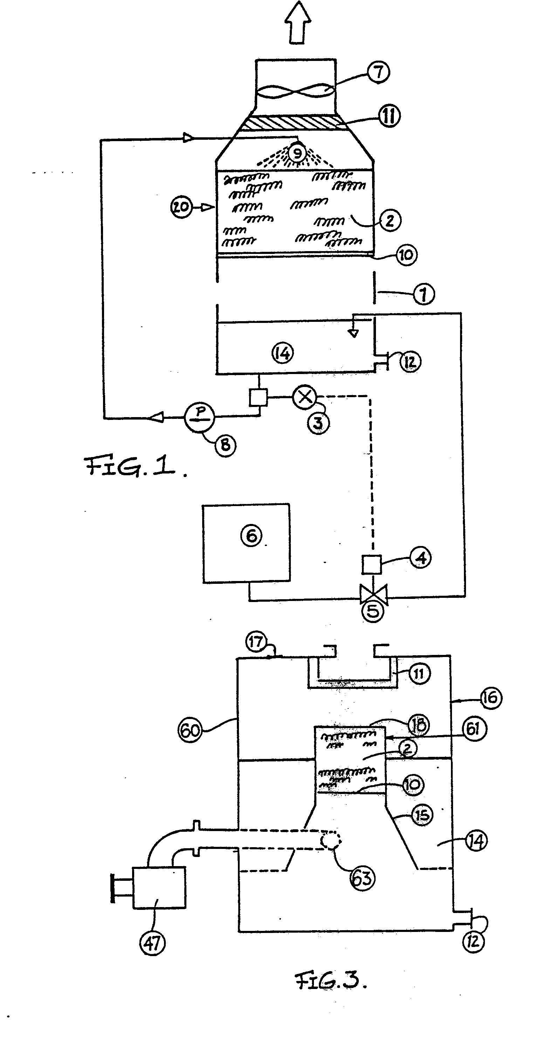

Referring to Figures 1 to 3 the schematic views show various arrangements of a carbon dioxide absorber. The apparatus as shown in Figure 1 may be totally housed in the enclosed space to be treated.

The apparatus includes a chamber 20 divided into several parts including tank 14 for holding absorbing solution such as caustic soda or and water.

Alternative chemicals for the absorption of carbon dioxide are as follows:

Potassium Hydroxide

Calcium Hydroxide

Sodium Carbonate

Potassium Carbonate

Calcium Carbonate

Amines

Ammonia

The chamber includes an exhaust fan 7 at the top of the chamber for drawing air through a packing material 2, which facilitates the contacting of the $CO_2$ laden atmosphere with the solution of water and absorbent. The solution is preferably sprayed by distributor 9. The packing material is supported on mesh floor 10. The aqueous solution is pumped from tank 14 by pump 8. Air is drawn in through openings 1 to pass through the packing 2 to mix with the aqueous solution falling through the packing. A demister pad or baffle 11 is provided to remove excess moisture from the treated air prior to being exhausted into the enclosed space being treated.

In operation as the air/$CO_2$ rises through the packing, the solution it contacts reacts with the $CO_2$ stripping it from the air. The air picks up water up to its saturation concentration. In this way the air is humidified. The stripped, humidified air exits through the air circulating fan 7. As the caustic soda (the primary active ingredient in the absorption solution) is spent (converted to sodium carbonate/sodium bicarbonate), the pH sensor, 3, senses a drop in pH and through the pH controller, 4, activates pH control valve, 5, which admits fresh caustic soda solution from bulk storage, 6.

The pH is controlled to ensure economy of usage of active ingredients. Most importantly it ensures that the spent solution is safe to dispose of when the ripening/degreening operation is complete. The absorber is preferably placed centrally inside the enclosed space. The space can be sealed and opened in 2 to 3 days when the ripening/degreening process is completed. Air flow rate through the fan is designed to give 1 to 4 air changes/hour of the enclosed space.

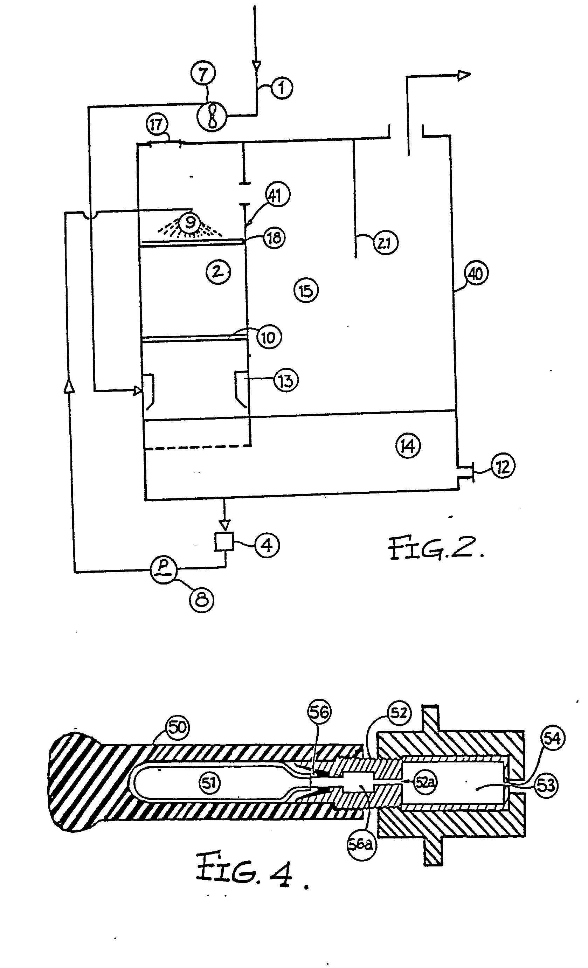

With reference to Figures 2 and 3 these show absorption chambers which may be positioned outside the enclosed spaces. Furthermore the system may be simpler in construction in not requiring automatic control of the pH levels and doing away with pumps for the aqueous solution (Figure 3).

With reference to Figure 2 chamber 40 forms a well for a large quantity of absorbing solution 14. The chamber includes a compartment 41 which has a similar purpose to chamber 20 shown in Figure 1. The compartment 41 includes a packing area 2 which is maintained continuously saturated by a spray of aqueous absorbing material 9.

The air to be treated is drawn from the enclosed space through ductwork 1 by blower 7 into an annular distributor 13 to travel through the packing material then into main chamber 40 past baffles 21 hence into ductwork back to the enclosed space. The chamber may be transparent or include a window to allow simple inspection and monitoring of liquid levels and pH colour changes in the aqueous solution where a pH probe is not fitted. Construction material used should be of anti corrosive material such as poly propylene or poly ethylene.

The absorbing solution initially charged is highly concentrated and has a relatively high pH to say 14 with caustic soda and modified with suitable chemicals to colour change at the desired pH depending upon the chemical absorbent used. The absorbent may be modified by the addition of fungicides or bacteriacides.

Liquid flow rate through the packing bed and gas flow up through the packing bed is designed to get efficient mass transfer of $CO_2$ into the solution, and water vapor into the atmosphere. Specific potential problems which may arise are:

a) Flooding of the packing due to excessive liquid rate over packing.

b) Carryover of liquid by the upflowing gas.

c) Maldistribution of liquid and vapor.

These potential problems are overcome by the prudent sizing of air and liquid handling components, the use of baffles and proper distribution of solution by sprays.

With reference to Figure 3 this shows a chamber 60 which may be at least partially transparent having a central open ended packing compartment 61 with one end immersed in aqueous solution. Used air from the enclosed space is blown through distributor 63 into the aqueous solution by blower 47 and directly into packing material 2 and then out to be returned to the enclosed space through outlet 11.

This system in its simplest form provides initial charging of absorbing solution at a starting pH of 14 approximately and monitoring for colour change during use to 9 or 10. The main chamber volume is sufficiently large to provide sufficient solution hold-up to allow for water loss as the circulated air is humidified. A safety valve 17 is provided to avoid over-pressure conditions.

The air blower 47 has a capacity sufficient to provide between 1 to 4 air changes in the enclosed space per hour. Blower static pressure may be of the order of 1 to 10 inches water gauge (0.25 to 2.5 kpa) depending upon ductwork volume and length.

The pump rate for the aqueous solution where applicable is chosen to match the air flow rate of the blower to ensure adequate mixing of the solution with air.

The absorber may be used in various applications including the following:-

    1.   Citrus degreening.

    2.   Banana ripening and degreeening.

    3.   Tropical fruit ripening.

    4.   Tomato ripening.

    5.   Controlled atmosphere for storage of fruit, vegetables, cereals and nuts.

The temperature of the aqueous solution can be controlled to maximise humidity control in the enclosed space where the control range is desired to be less than that normally obtainable from the apparatus without temperature control. For example, bananas are ideally ripened in an atmosphere of 80 to 90% humidity whereas citrus should be degreened at above 90% humidity.

Suitable indicators to give or indicate a colour change for the purpose of showing pH levels may include the following:-

    1.   Brilliant orange.

    2.   Alizarin yellow.

    3.   Phenolphthalein.

    4.   Thymolphthalein.

The aqueous solution may be regenerated if desired by heating of the spent solution in apparatus external of the absorbing system to liberate carbon dioxide and allow re-use.

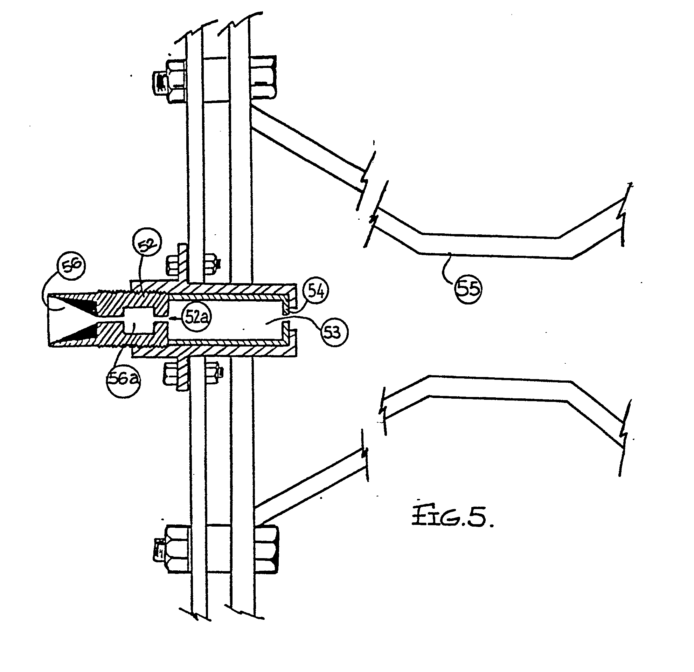

The construction and operation of the ethylene injector will now be described in greater detail having reference to Figures 4 and 5.

The injector includes a cylinder holder 50 for holding a small cylinder 51 containing ethylene gas. The holder 50 is adapted to screw into an orifice body 52 and a cap on the cylinder pierced to release gas through the orifice body 52 into chamber 53. The chamber includes an outlet orifice 54 which is preferably discharged into a venturi mixer 55.

The orifice body includes a seal member 56 to seal around the mouth of the cylinder and prevent leakage of ethylene gas as it is released.

The outlet orifice 54 and orifice chamber 53 provides a primary control over the flow of gas therethrough. The orifice body may include a filter 56a to prevent solids passing that may block the orifices. The pressure control orifice 52a into the chamber may be in the range of 0.003" to 0.01" but more specifically in the range of 0.005" to 0.008" diameter.

The flow control orifice out of the chamber may be in the range of 0.01" to 0.025" diameter but more specifically in the range of 0.015" to 0.02" diameter.

The ethylene is injected about every 12 hours for batch processing where there is no provision for carbon dioxide absorption. Where there is absorption the ethylene injection may be restricted to a once only injection.

The invention consists of a system in which pure ethylene gas will be packaged in small highly pressurised cylinders of a size (10 c.c. to 40 c.c.) suitable for most ripening rooms (1,000 cu.ft. to 20,000 cu.ft.). Storage pressure will be up to 10,000 kpa.

The contents of each cylinder will be fully discharged into the ripening room thereby adding a measured quantity of gas into the room. Varying quantities of gas can be added to ripening rooms by discharging more than one cylinder. Therefore the invention provides a discrete (digital) method of controlling the amount of ethylene gas added.

The risk of fire and/or explosion resulting from the addition of ethylene gas will be very small because storage cylinder size will be small and hence the total quantity of ethylene gas that can be intentionally or accidentally added to a room will be small. This is in direct contrast to existing methods which have no such design limitations and are therefore subject to high risk of error which is known to frequently lead to potentially hazardous fire or explosive situations in such rooms.

Under some circumstances it may be desirable to ensure that a non-flammable gas mixture always enters the ripening room. This additional level of safety is achieved by providing a venturi type mixer which mixes the highly explosive ethylene gas with enough air to ensure a non-explosive gas mixture. The venturi type mixer will be designed to entrain a very high ratio of air to motive fluid (ethylene) and thereby ensure a gas mixture below the lower explosive limit at the exit of the venturi.

Advantages provided by this invention include:-

1.  Uniform and reproducible ripening results.

2.  Optimum concentration of ripening gas for a particular service.

3.  Reduced gas usage compared with current methods.

WE CLAIM :

1.      A carbon dioxide absorption system for a fruit and vegetable ripening or degreening room comprising a tower through which atmosphere from said room is adapted to be circulated, passing an aqueous solution of carbon dioxide absorbent through the tower to allow said atmosphere to contact said solution and to react with and remove carbon dioxide from said atmosphere wherein the atmosphere picks up water to substantially saturation concentration to humidify said atmosphere.

2.      A carbon dioxide absorption system as claimed in claim 1 wherein a pH sensor is provided to contact said solution and is operable to activate a control valve to admit fresh carbon dioxide absorbent whereby the pH of the solution is maintained at a value that efficiently uses the $CO_2$ absorbent (e.g. pH 9.5 to 10.5 for sodium hydroxide absorbent).

3.      Apparatus for removing carbon dioxide from and dosing ethylene into an enclosed space used for fruit and vegetable ripening or storage comprising a carbon dioxide absorption system for a fruit and vegetable ripening or degreening room comprising a tower through which atmosphere from said room is adapted to be circulated, passing an aqueous solution of carbon dioxide absorbent through the tower to allow said atmosphere to contact said solution and to react with and remove carbon dioxide from said atmosphere wherein the atmosphere picks up water to substantially saturation concentration to humidify said atmosphere, and a release means for receiving small pressurised containers of ethylene whereby discrete amounts of ethylene gas are released from said containers, a venturi mixer adjacent said container receiving said gas adapted to mix with air before or as the gas is introduced into said enclosed space.

4. A method of maintaining a predetermined carbon dioxide level within an enclosed space for use as a fruit and vegetable ripening or storage comprising the steps of circulating atmosphere from said space through an aqueous solution of carbon dioxide absorbent to remove carbon dioxide therefrom and maintain humidity therein and returning the treated atmosphere to said space.

5. A carbon dioxide absorption system as claimed in claim 1 or 2 wherein the absorbent is selected from one of the following compounds:- sodium hydroxide, potassium hydroxide, calcium hydroxide, sodium carbonate, potassium carbonate, calcium carbonate, amines, ammonia.

6. Apparatus as claimed in claim 3 wherein said release means includes an orifice chamber including an inlet orifice for receiving released gas and an outlet orifice for exhausting gas from said chamber said inlet orifice diameter being in the range of 0.003" to 0.01" and the outlet orifice diameter being in the range of 0.01" to 0.025".

7. Apparatus as claimed in claim 6 wherein the inlet orifice diameter is in the range of 0.005" to 0.008" and the outlet orifice diameter is in the range of 0.015" to 0.02".

8. A system of ethylene injection into a fruit or vegetable ripening or degreening room comprising packaging ethylene gas at high pressure in small pressure containers releasing the stored gas in predetermined amounts through a venturi outlet to mix the gas with surrounding air or the atmosphere of said room into which ethylene is to be injected wherein the injected gas mixture is non-flammable.

9.     A system as claimed in claim 8 wherein said ethylene gas is injected into a venturi mixer to facilitate mixing of said gas with air, said gas being released from a chamber having an inlet and outlet orifice wherein the inlet orifice dimension is smaller than the outlet orifice dimension.

10.     Apparatus for absorbing excess carbon dioxide in an enclosed space used for fruit and vegetable ripening or storage including a tower through which atmosphere from said enclosed space is adapted to be circulated, absorption means in said tower for receiving an aqueous solution of carbon dioxide absorbent means for circulating said atmosphere through said absorption means whereby carbon dioxide is removed from said atmosphere and picks up humidifying liquid to substantially saturation concentration.

1/3

0162674

FIG.1.

FIG.3.

0162674

FIG.2.

FIG.4.

FIG.5.